# EUROPÄISCHE PATENTANMELDUNG

(11) **EP 4 147 910 A1**
(43) Veröffentlichungstag der Anmeldung: **15.03.2023**
(21) Anmeldenummer: 22193349.2
(22) Anmeldetag: 31.08.2022
(51) Int. Cl.: B60P 3/34

(54) **FREIZEITFAHRZEUG, INSBESONDERE WOHNMOBIL ODER WOHNWAGEN, UND RAUMERWEITERUNG**

(30) Priorität: 12.09.2021 DE 102021123570
(71) Anmelder: Erwin Hymer Group SE, 88339 Bad Waldsee (DE)
(72) Erfinder: Freimann, Rüdiger, 88436 Eberhardzell (DE); Döring, Jens, 88339 Bad Waldsee (DE)
(74) Vertreter: Waller, Stefan

(57) **Zusammenfassung**

Raumerweiterung (2) für ein Freizeitfahrzeug (1), insbesondere für ein Wohnmobil oder einen Wohnwagen, mit einem Rahmen, einem ausfahrbaren Element (3), das aus dem Rahmen (13) ausfahrbar ist, und zumindest einer Seitenwand (4), wobei die Seitenwand (4) zumindest mittelbar mit dem ausfahrbaren Element (3) verbunden ist. Vorgeschlagen wird, dass die Seitenwand (4) als flexible Seitenwand (4) ausgebildet ist, dass die Seitenwand (4) in einem Ausgangszustand, in dem das ausfahrbare Element (3) eingefahren ist, in einer Aufnahme (10) angeordnet ist, und dass die zumindest eine Seitenwand (4) zumindest mittelbar so mit dem Rahmen (13) verbunden ist, dass eine umfängliche Abdichtung (6) zwischen der zumindest einen Seitenwand (4) und dem Rahmen (13) gebildet ist. Ferner ist ein Freizeitfahrzeug (1) mit solch einer Raumerweiterung (2) angegeben.

## Beschreibung

Die Erfindung betrifft ein Freizeitfahrzeug, insbesondere ein Wohnmobil oder einen Wohnwagen, mit zumindest einer Raumerweiterung.

Aus der CN 211493816 U ist eine Raumerweiterung für ein Wohnmobil bekannt. Die bekannte Raumerweiterung weist eine hintere Platte und Seitenplatten auf. Außerdem ist eine oben angeordnete, elektrisch betätigte Verstellstange vorgesehen, die unter anderem die hintere Platte ausfährt, so dass eine Nutzung zum Schlafen möglich ist. Über die Verstellstange erfolgt auch ein Einfahren. Die starren Seitenplatten sind klappbar ausgeführt, um den Platzbedarf im eingefahrenen Zustand zu verringern.

Die aus der CN 211493816 U bekannte Raumerweiterung hat den Nachteil, dass eine Abdichtung insbesondere an den starren Seitenplatten, die zusammenklappbar ausgeführt sind, begrenzt ist.

Der vorliegenden Erfindung liegt die Aufgabe zugrunde, ein Raumerweiterung und ein Freizeitfahrzeug mit einer Raumerweiterung anzugeben, die verbessert ausgestaltet sind.

Diese Aufgabe wird durch ein Raumerweiterung mit den Merkmalen des unabhängigen Patentanspruchs 1 und durch eine Freizeitfahrzeug mit den Merkmalen des unabhängigen Patentanspruchs 8 gelöst. Vorteilhafte Weiterbildungen der Erfindung sind in den Unteransprüchen angegeben.

Die Aufgabe wird durch eine Raumerweiterung für ein Freizeitfahrzeug, insbesondere für ein Wohnmobil oder einen Wohnwagen, mit einem Rahmen, einem ausfahrbaren Element, das aus dem Rahmen ausfahrbar ist, und zumindest einer Seitenwand gelöst, wobei die Seitenwand zumindest mittelbar mit dem ausfahrbaren Element verbunden ist, wobei die Seitenwand als flexible Seitenwand ausgebildet ist, wobei die Seitenwand in einem Ausgangszustand, in dem das ausfahrbare Element eingefahren ist, in einer Aufnahme angeordnet ist und wobei die zumindest eine Seitenwand zumindest mittelbar so mit dem Rahmen verbunden ist, dass eine umfängliche Abdichtung zwischen der zumindest einen Seitenwand und dem Rahmen gebildet ist.

Ferner wird die Aufgabe durch ein Freizeitfahrzeug mit solch einer Raumerweiterung gelöst.

Vorteilhaft ist es, dass die umfängliche Abdichtung zwischen der zumindest einen Seitenwand und dem Rahmen als luftdichte Abdichtung ausgebildet ist. Dadurch besteht ein vorteilhafter Schutz gegenüber Gasen. Insbesondere kann ein unbemerktes Einleiten von Gasen verhindert werden.

Vorteilhaft ist es, dass die umfängliche Abdichtung zwischen der zumindest einen Seitenwand und dem Rahmen durch eine Verbindung der zumindest einen Seitenwand mit dem Rahmen ausgebildet ist. Hierdurch kann eine zuverlässige Abdichtung realisiert werden, die eine komplizierte Dichtungsführung für eine Wärmeisolation und/oder ein Eindringen von Wasser vermeidet. Vorteilhaft ist es entprechend, dass die zumindest eine Seitenwand umfänglich mit dem Rahmen verklebt ist.

Vorteilhaft ist es, dass die Seitenwand als schlauchförmige Seitenwand ausgebildet ist, die umfänglich geschlossen ausgestaltet ist. Hierdurch kann über die Lebensdauer eine zuverlässige Abdichtung realisiert werden. Insbesondere können hierdurch zusätzliche Abdichtungen beziehungsweise Verbindungen zwischen mehreren einzelnen Seitenwänden eingespart werden.

Vorteilhaft ist es, dass die Seitenwand als faltbare und/oder kontraktionsfähige Seitenwand ausgebildet ist und/oder dass die Aufnahme als Tasche ausgebildet ist. Dadurch kann die Seitenwand in vorteilhafter Weise in die Aufnahme geführt werden. Durch die Tasche kann insbesondere gewährleistet werden, dass eine kompakte Anordnung gegeben ist und ein Eindringen von Feuchtigkeit verhindert wird.

Vorteilhaft ist es, dass die Seitenwand als aufblasbare Seitenwand ausgebildet ist. Je nach Ausgestaltung können hierdurch weitere Vorteile realisiert werden. Insbesondere kann eine Wärmeisolation und/oder eine Betätigung der Raumerweiterung durch Aufblasen der Seitenwand realisiert werden.

Bei einem Freizeitfahrzeug ist es vorteilhaft, dass der Rahmen an einer Aufbauwand vorgesehen ist. Hierbei kann der Rahmen als separater Rahmen ausgebildet sein, der in die Aufbauwand eingesetzt ist. Der Rahmen kann aber auch in die Aufbauwand integriert sein.

Vorteilhaft ist es, dass die Raumerweiterung einen ausfahrbaren Teleskopboden umfasst und/oder dass sich der Rahmen an seiner Unterseite an einen Laufboden anschließt. Dadurch kann die Raumerweiterung in vorteilhafter Weise zur Vergrößerung eines Wohnraums genutzt werden. Hierbei wird in vorteilhafter Weise ein Eindringen von Feuchtigkeit von Boden her verhindert.

Das faltbare bzw. kontraktionsfähige, aufblasbare Material der Seitenwand der Raumerweiterung ist vorzugsweise vollständig um den Ausschub (Raumerweiterung) geführt und umschließt damit vorzugsweise auch den ausfahrenden Fußboden (Teleskopboden). Hierbei kann an der Außenwand und der Aufbauwand ein luftdichtes Verkleben realisiert sein.

Der Ausschub kann vollständig abgeschlossen werden. Es ist keine komplizierten Dichtungsführungen für eine Wärmeisolation oder gegen ein Eindringen von Wasser erforderlich. Es besteht dann vorzugsweise keine Möglichkeit, mit Schläuchen oder anderen Gegenständen unbemerkt in den Innenraum einzudringen, was einen Schutz gegen Gasangriffe realisiert.

Die vorzugsweise umlaufende Seitenwand beziehungsweise der diesbezügliche Stoff kann gegebenenfalls auch als zusätzliche Abdichtung realisiert sein, die unabhängig vom eigentlichen Ausschub (Push-out) ist. Solch eine unabhängige, umlaufende Seitenwand kann einen zusätzlichen Schutz bieten und kann bei Verschleiß durch Umwelteinflüsse einfach getauscht werden. Insbesondere solch eine zusätzliche umlaufende Seitenwand kann thermisch isolierende oder Licht abschottende Eigenschaften aufweisen.

Weitere Vorteile und Einzelheiten der Erfindung werden anhand des in den schematischen Figuren dargestellten Ausführungsbeispiels näher erläutert. Hierbei zeigt:
- Fig. 1: ein Freizeitfahrzeug mit einer Raumerweiterung entsprechend einem möglichen Ausführungsbeispiel in einer schematischen, auszugsweisen Darstellung;
- Fig. 2: ein Freizeitfahrzeug mit einer Raumerweiterung entsprechend einem möglichen Ausführungsbeispiel in einer schematischen, auszugsweisen Darstellung und
- Fig. 3: den in Fig. 1 mit III bezeichneten Ausschnitt entsprechend einem möglichen Ausführungsbeispiel in einer schematischen Darstellung.

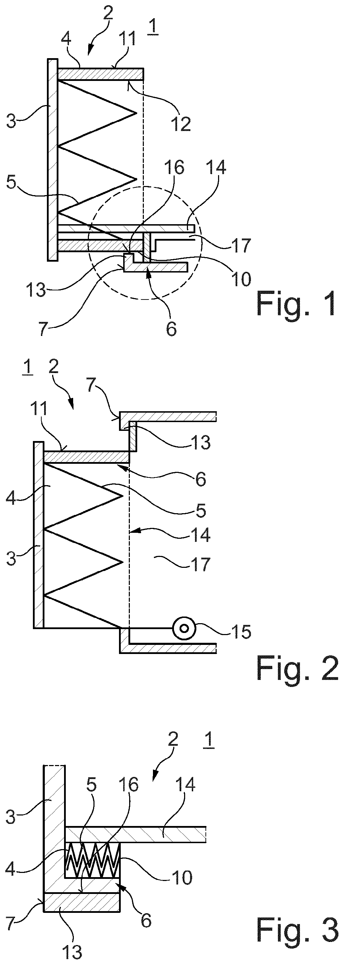

Fig. 1 zeigt ein Freizeitfahrzeug 1, das als Wohnmobil oder Wohnwagen ausgestaltet sein kann, entsprechend einem möglichen Ausführungsbeispiel in einer schematischen, auszugsweisen Darstellung. Das Freizeitfahrzeug 1 kann beispielsweise auf einem Campingplatz abgestellt werden. Dann kann in vorteilhafter Weise ein Umbau vorgenommen werden, der den Nutzwert des Freizeitfahrzeugs 1 wesentlich erhöht. Hierfür weist das Freizeitfahrzeug 1 eine Raumerweiterung 2 auf.

Die Raumerweiterung 2 für das Freizeitfahrzeug 1 umfasst ein ausfahrbares Element 3 und eine Seitenwand 4. Die Seitenwand 4 ist hierbei auf geeignete Weise mit dem ausfahrbaren Element 3 verbunden. Das ausfahrbare Element 3 kann als plattenförmiges Element 3 ausgebildet sein. In diesem Ausführungsbeispiel ist die Seitenwand 4 schlauchförmig ausgebildet, so dass diese umfänglich geschlossen ist. Bei einer abgewandelten Ausgestaltung können aber auch mehrere Seitenwände 4 vorgesehen sein.

Die Seitenwand 4 ist als flexible Seitenwand 4 ausgebildet. Hierbei ist die Seitenwand 4 in einem Ausgangszustand, in dem das ausfahrbare Element 3 eingefahren ist, zunächst zusammengefaltet, wie es in entsprechender Weise in Fig. 3 dargestellt ist. In einem ausgefahren Zustand, in dem das ausfahrbare Element 3 ausgefahren ist, wie es in Fig. 1 dargestellt ist, ist die Seitenwand 4 zumindest im Wesentlichen gestreckt.

Die Raumerweiterung 2 umfasst ein Zugmittel 5. Das Zugmittel 5 weist zumindest eine Schnur 5 auf. In diesem Ausführungsbeispiel ist das Zugmittel 5 durch eine Schnur 5 gebildet. Bei einer abgewandelten Ausgestaltung kann das Zugmittel 5 beispielsweise auch als wickelbares Bandmaterial ausgebildet sein.

Das Zugmittel 5 führt die Seitenwand 4. Insbesondere bei einem Verstellen des ausfahrbaren Elements 3 aus dem ausgefahren Zustand (Fig. 1) in den Ausgangszustand (vergleiche Fig. 3) führt das Zugmittel 5 die Seitenwand 4.

Wie es auch an Hand der Fig. 3 erläutert ist, kann beispielsweise eine Aufnahme 10 für die Seitenwand 4 vorgesehen sein, wobei das Zugmittel 5 bei einem Verstellen des ausfahrbaren Elements 3 aus dem ausgefahren Zustand in den Ausgangszustand die Seitenwand 4 dann zurück in die Aufnahme 10 führt.

Das Zugmittel 5 kann hierfür im ausgefahrenen Zustand an einer Innenseite 12 der zumindest im Wesentlichen gestreckten Seitenwand 4 angeordnet sein. Das Zugmittel 5 verläuft im ausgefahrenen Zustand serpentinenförmig zwischen dem ausfahrbaren Element 3 und einem Rahmen 13 entlang der zumindest im Wesentlichen gestreckten Seitenwand 4 hin und her. Hierdurch ist umfänglich eine Stützung und somit Führung gegeben. Der Rahmen 13 ist an einer Aufbauwand 7 des Freizeitfahrzeugs 1 vorgesehen. Der Rahmen 13 kann hierbei in die Aufbauwand 7 integriert sein. Insbesondere bei einer Ausgestaltung zum Nachrüsten kann der Rahmen 13 hierbei aber auch in die Aufbauwand 7 eingesetzt werden.

Das ausfahrbaren Element 3 ist aus dem Rahmen 13 ausfahrbar. Hierbei ist die Seitenwand 4 so mit dem Rahmen 13 verbunden, dass eine umfängliche Abdichtung 6 zwischen der Seitenwand 4 und dem Rahmen 13 gebildet ist. Die Verbindung zwischen der Seitenwand 4 und dem Rahmen 13 ist vorzugsweise direkt ausgeführt. Bei einer abgewandelten Ausgestaltung kann die Verbindung allerdings auch über ein entsprechend abdichtendes Verbindungsmittel gewährleistet sein.

Bevorzugt ist die umfängliche Abdichtung 6 zwischen der Seitenwand 4 und dem Rahmen 13 als luftdichte Abdichtung 6 ausgebildet. Beispielsweise kann die Seitenwand 4 umfänglich mit dem Rahmen 13 verklebt sein. Vorteilhaft ist es hierbei, dass die Seitenwand 4 als schlauchförmige Seitenwand 4 ausgebildet ist. Dadurch kann die Seitenwand 4 umfänglich geschlossen ausgestaltet sein.

Das Zugmittel 5 kann zudem zum Betätigen dienen. Hierfür kann das ausfahrbare Element 3 durch das Zugmittel 5 aus dem ausgefahrenen Zustand in den Ausgangszustand verstellt werden, indem das Zugmittel 5 betätigt wird, wie es auch an Hand der Fig. 2 beschrieben ist.

Die Raumerweiterung 2 kann einen Teleskopboden 14 aufweisen, der beim Ausfahren mit ausgefahren wird, um eine Nutzung zu ermöglichen. Beispielsweise kann dann der Teleskopboden 14 belastet werden, um eine Erweiterung eines Wohnraums zu realisieren. Der Rahmen 13 kann sich an seiner Unterseite 16 an einen Laufboden 17 anschließen. Dann kann der ausfahrbaren Teleskopboden 14 den Laufboden 17 im ausgefahrenen Zustand der Raumerweiterung 2 erweitern.

Fig. 2 zeigt das Freizeitfahrzeug 1 mit der Raumerweiterung 2 entsprechend einem möglichen Ausführungsbeispiel in einer schematischen, auszugsweisen Darstellung. In diesem Ausführungsbeispiel ist das Zugmittel 5 im ausgefahrenen Zustand der Raumerweiterung 2 an einer Außenseite 11 der zumindest im Wesentlichen gestreckten Seitenwand 4 angeordnet. Hierdurch ist ebenfalls eine umfängliche Stützung gegeben.

Die Raumerweiterung 2 weist eine Wickeltrommel 15 auf. Das Zugmittel 5 ist im Ausgangszustand zum großen Teil auf die Wickeltrommel 15 aufgewickelt. Beim Ausfahren der Raumerweiterung 2 wird das Zugmittel 5 dann nach und nach abgewickelt. Beim Verstellen des ausfahrbaren Elements 3 aus dem ausgefahren Zustand in den Ausgangszustand wird das Zugmittel 5 wieder auf die Wickeltrommel 15 aufgewickelt.

Durch die realisierte Schnurführung, bei der das Zugmittel 5 aufgewickelt wird und dadurch auch beim Einfahren gespannt bleibt, wird ein Ausbeulen und somit ein unbeabsichtigtes Falten oder Verklemmung der Seitenwand 4 verhindert.

Fig. 3 zeigt den in Fig. 1 mit III bezeichneten Ausschnitt entsprechend einem möglichen Ausführungsbeispiel in einer schematischen Darstellung. In diesem Ausführungsbeispiel ist die Aufnahme 10 als Tasche 10 ausgebildet.

Die Seitenwand 4 kann als aufblasbare Seitenwand 4 ausgebildet sein. Hierfür kann die Seitenwand 4 doppelwandig ausgeführt sein. Dann ist durch ein Aufblasen der Seitenwand 4 eine Verstellung des ausfahrbaren Elements 3 aus dem Ausgangszustand in den ausgefahrenen Zustand möglich. Die Seitenwand 4 wird hierfür luftdicht angebunden.

Die Seitenwand 4 kann hierbei auch aus einem Dropstichmaterial gebildet sein, bei dem zumindest eine mit Fäden durchzogene Luftkammer vorgesehen ist, so dass ein Aufblasen mit höheren Drücken möglich ist. Dadurch wird eine Versteifung im ausgefahrenen Zustand erzielt.

Die flexible Seitenwand 4 kann insbesondere als Stoffwand 4 ausgebildet sein. Je nach Anwendungsfall kann die Seitenwand 4 als faltbare und/oder kontraktionsfähige Seitenwand 4 ausgebildet sein.

Somit ist eine vorteilhafte Führung der flexiblen und faltbaren Seitenwand 4 der Raumerweiterung möglich. Insbesondere kann eine gesicherte Führung der Seitenwand 4, insbesondere einer Stoffwand 4, erzielt werden, um ein Einklemmen und/oder Beschädigen der Stoffbahn zu verhindern.

Die realisierte Schnurführung dient vorzugsweise dazu, die Seitenwand 4, die vorzugsweise aus Stoffmaterial gebildet ist, im Schließvorgang der Raumerweiterung 2 eindeutig in die dafür vorgesehene Tasche 10 zu führen. Hierfür können eine oder mehrere Schnüre 5 in der Art umlaufend um den Stoff der Seitenwand 4 gebunden sein, dass mit Einziehen der Schnüre 5 die Raumerweiterung 2, die als Push-out ausgebildet sein kann, eingezogen werden kann. Bei einer abgewandelten Ausgestaltung kann die Schnur 5 auch synchron zum Einfahrvorgang eingezogen werden. Dies gilt entsprechend für andere Zugmittel 5.

Somit kann der Stoff der Seitenwand 4 ohne Beschädigung gleichmäßig gefaltet werden. Die Raumerweiterung 2 erhält dadurch eine deutlich verbesserte Lebensdauer. Der Einzug der Raumerweiterung 2 kann allein durch die Schnürung erfolgen. Die Raumerweiterung 2 kann in vorteilhafter Weise eine vollständige Abdichtung aus gewissermaßen einem Stück ermöglichen.

Die Erfindung ist nicht auf die beschriebenen Ausführungsbeispiele beschränkt.

## Patentansprüche

1. Raumerweiterung (2) für ein Freizeitfahrzeug (1), insbesondere für ein Wohnmobil oder einen Wohnwagen, mit einem Rahmen, einem ausfahrbaren Element (3), das aus dem Rahmen (13) ausfahrbar ist, und zumindest einer Seitenwand (4), wobei die Seitenwand (4) zumindest mittelbar mit dem ausfahrbaren Element (3) verbunden ist,
**dadurch gekennzeichnet,**
**dass** die Seitenwand (4) als flexible Seitenwand (4) ausgebildet ist, dass die Seitenwand (4) in einem Ausgangszustand, in dem das ausfahrbare Element (3) eingefahren ist, in einer Aufnahme (10) angeordnet ist, und dass die zumindest eine Seitenwand (4) zumindest mittelbar so mit dem Rahmen (13) verbunden ist, dass eine umfängliche Abdichtung (6) zwischen der zumindest einen Seitenwand (4) und dem Rahmen (13) gebildet ist.

2. Raumerweiterung nach Anspruch 1,
**dadurch gekennzeichnet,**
**dass** die umfängliche Abdichtung (6) zwischen der zumindest einen Seitenwand (4) und dem Rahmen (13) als luftdichte Abdichtung (6) ausgebildet ist.

3. Raumerweiterung nach Anspruch 1 oder 2,
**dadurch gekennzeichnet,**
**dass** die umfängliche Abdichtung (6) zwischen der zumindest einen Seitenwand (4) und dem Rahmen (13) durch eine Verbindung der zumindest einen Seitenwand (4) mit dem Rahmen (13) ausgebildet ist.

4. Raumerweiterung nach einem der Ansprüche 1 bis 3,
**dadurch gekennzeichnet,**
**dass** die zumindest eine Seitenwand (4) umfänglich mit dem Rahmen (13) verklebt ist.

5. Raumerweiterung nach einem der Ansprüche 1 bis 4,
**dadurch gekennzeichnet,**
**dass** die Seitenwand (4) als schlauchförmige Seitenwand (4) ausgebildet ist, die umfänglich geschlossen ausgestaltet ist.

6. Raumerweiterung nach einem der Ansprüche 1 bis 5 ,
**dadurch gekennzeichnet,**
**dass** die Seitenwand (4) als faltbare und/oder kontraktionsfähige Seitenwand (4) ausgebildet ist und/oder dass die Aufnahme (10) als Tasche (10) ausgebildet ist.

7. Raumerweiterung nach einem der Ansprüche 1 bis 6,
**dadurch gekennzeichnet,**
**dass** die Seitenwand (4) als aufblasbare Seitenwand (4) ausgebildet ist.

8. Freizeitfahrzeug (1), insbesondere Wohnmobil oder Wohnwagen, mit zumindest einer Raumerweiterung (2) nach einem der Ansprüche 1 bis 7.

9. Freizeitfahrzeug nach Anspruch 8,
**dadurch gekennzeichnet,**
**dass** der Rahmen (13) an einer Aufbauwand (7) vorgesehen ist.

10. Freizeitfahrzeug nach Anspruch 8 oder 9,
**dadurch gekennzeichnet,**
**dass** die Raumerweiterung (2) einen ausfahrbaren Teleskopboden (14) umfasst und/oder dass sich der Rahmen (13) an seiner Unterseite (16) an einen Laufboden (17) anschließt.
